# EUROPÄISCHE PATENTSCHRIFT

(11) **EP 2 829 490 B1**
(45) Veröffentlichungstag und Bekanntmachung des Hinweises auf die Patenterteilung: **09.09.2015**
(21) Anmeldenummer: 13003657.7
(22) Anmeldetag: 22.07.2013
(51) Int. Cl.: B65D 79/00, B65D 85/72, B65B 7/28, A47J 36/06, A47J 47/08, A47J 47/14, A21D 13/00

(54) **Verfahren zum Backen von Nahrungsmitteln, insbesondere Kuchen**
Method of baking food, in particular cakes
Méthode pour la cuisson des aliments, notamment pour des gâteaux

(43) Veröffentlichungstag der Anmeldung: 28.01.2015
(73) Patentinhaber: Stiebling, Steffen, 99891 Schwarzhausen (DE)
(72) Erfinder: Steffen Stiebling, 99867 Schwarzhausen (DE)
(74) Vertreter: Späth, Volker

(56) Entgegenhaltungen:
- EP-A1- 0 943 553
- EP-A1- 1 279 600
- EP-A1- 1 516 816
- FR-A3- 2 630 408
- JP-A- H08 295 354
- US-A- 2 649 379
- US-A- 2 815 883
- US-A- 4 998 638
- US-A- 5 429 833
- US-A- 5 546 731

## Beschreibung

Die Erfindung bezieht sich auf ein Verfahren zum Backen von Nahrungsmitteln, insbesondere Kuchen.

Obwohl verschiedene Nahrungsmittel gebacken werden können, bezieht sich die folgende Beschreibung insbesondere auf Kuchen aller Art, ist aber auf andere zu backende Nahrungsmittel übertragbar und schließt diese mit ein.

Durchgebackene nasse Kuchen, wie Käsekuchen, Obstkuchen, Mohnkuchen und dergleichen, haben eine sehr kurze Haltbarkeit, nämlich maximal 2 bis 3 Tage bei normaler Zimmertemperatur. Durch Kühlung kann die Haltbarkeit von Kuchen um einige Tage verlängert werden. Darüber hinaus können Kuchen tiefgefroren werden und haben dann bei etwa -18°C eine Haltbarkeit von etwa 12 Monaten.

Beide Möglichkeiten - gekühlte oder tiefgefrorene Kuchen - erfordern eine ununterbrochene Kühlkette von der Lagerung über den Transport bis in das Verkaufsobjekt und weiter bis zum Verbraucher. Diese Kühlkette aufrecht zu erhalten, ist mit nicht unerheblichen Problemen und Kosten behaftet.

Eine weitere Möglichkeit der Haltbarmachung von Kuchen ist in der Regel der Einsatz von Konservierungsstoffen, womit die Haltbarkeit um einige Tage auch bei Zimmertemperatur verlängert werden kann. Jedoch ist der Verzehr von diesen Zusatzstoffen mittlerweile umstritten.

Aus der FR 2 630 408 A3 ist Verpackung für zu backende Nahrungsmittel bekannt, die eine schalen- oder topfförmige Backform und einen flexiblen Deckel aus Aluminiumfolie, die beide mit einem backstabilen Siegellack beschichtet sind, wobei der Deckel mehrere sich ringförmig um den Mittelpunkt konzentrisch erstreckende wellenartige Ausprägungen aufweist und die Backform mit dem Deckel durch Anwendung von Druck und Hitze durch Verschmelzen des Siegellackes luftdicht und steril versiegelt ist.

Des Weiteren ist aus der US 2,649,379 ein Verfahren zum Backen von Nahrungsmitteln bekannt, bei dem das Nahrungsmittel in einer Backform mit einer luftdichten Zellophanfolienumhüllung gebacken und anschließend gefrostet wird. Der Kunde kann dann die Zellophanfolienumhüllung entfernen und in einem Ofen das Nahrungsmittel in der Backform backen.

Darüber hinaus ist aus der EP 1 279 600 A1 ein Verfahren zum Verpacken eines partiell gebackenen Brotes in einer langen schalenförmigen Verpackung aus einem thermoplastischen gas-sperrenden Verpackungsmaterial bekannt, wobei unter einer bestimmten Atmosphäre die Verpackung einem Vakuum ausgesetzt wird, wenn das Brotprodukt aus dem Backofen entnommen wird und noch eine Temperatur von mindestens 80° aufweist. Dadurch ist es nicht nötig, die Verpackung zu sterilisieren oder das Brotprodukt einzufrieren.

Der Erfindung liegt die Aufgabe zugrunde, ein Verfahren zum Backen von Nahrungsmitteln, insbesondere Kuchen, zu schaffen, bei denen auf jegliche Kühlung, Tiefkühlung und/oder Konservierungsstoffe völlig verzichtet und eine lange Haltbarkeitsdauer erzielt werden kann, wobei eine Versiegelung der Backform für das Nahrungsmittel durch einen Deckel ermöglicht wird.

Erfindungsgemäß wird die Aufgabe durch ein Verfahren zum Backen von Nahrungsmitteln, insbesondere Kuchen, gelöst durch die Verfahrensschritte:
- Einbringen einer Backmasse in eine schalen- oder topfförmige Backform aus Aluminiumfolie, die mit einem backstabilen Siegellack beschichtet ist,
- Backen der Backmasse in der Backform für 40 bis 60 Minuten bei einer Backtemperatur je nach Sorte der Backmasse bei 180 bis 220°C, wobei die Kerntemperatur nach dem Backvorgang über 90°C beträgt,
- nach einer kurzen Wartezeit von 3 bis 8 Minuten nach dem Backvorgang Auflegen eines flexiblen Deckels aus Aluminiumfolie, deren Rand mit einem backstabilen Siegellack beschichtet ist, auf den Rand mit Siegelfläche der Backform,
- Versiegeln der Backform mit dem Deckel mittels Druck und Hitze in einer Siegelmaschine, wobei die Kerntemperatur der Backmasse zu diesem Zeitpunkt über 90°C beträgt.

Das erfindungsgemäße Verfahren verzichtet völlig auf jegliche Kühlung, Tiefkühlung oder Konservierungsstoffe. In ihr können sämtliche Kuchen, also nasse Kuchen sowie auch trockene Rührkuchen, bei normaler Umgebungstemperatur gelagert und transportiert werden.

Dieses Verfahren eröffnet deutlich mehr Möglichkeiten bezüglich Lagerung, Transport und Distribution und ist erheblich kostengünstiger, insbesondere auf Grund von Energieeinsparungen.

Für den Verbraucher bietet die mit dem Verfahren behandelte Verpackung ebenfalls erhebliche Vorteile, denn sie kann ohne weiteres überall hin transportiert werden und ist ohne jegliches Auftauen oder Aufbacken jederzeit sofort verzehrbereit.

Durch die Hitze von über 90°C zum Zeitpunkt des Verschließens der Verpackung ist der Kuchen steril. Auch die restliche Luft in der Verpackung wird durch die Resthitze des Kuchens sterilisiert. Der Kuchen ist somit frei von Mikroorganismen und wie eine Konserve sehr lange haltbar.

Die Backzeit von 40 bis 60 Minuten und die Backtemperatur von 180 bis 220°C, sowie die kurze Wartezeit von 3 bis 8 Minuten bis zum Auflegen des Deckels auf die Backform sind abhängig von der zu backenden Kuchensorte.

Nasse Kuchen haben die Eigenschaft, sich während des Backens auszudehnen, in der Form zu steigen, und beim Abkühlen wieder abzusinken. Das Absinken bzw. Schrumpfen des Kuchens beginnt sofort nach dem Verlassen des Ofens und ist dann am heftigsten. Daher muss mit dem Versiegeln einige Minuten gewartet werden.

Jedoch setzt sich der Schrumpfvorgang auch nach dem Versiegeln noch für längere Zeit fort, bis der Kuchen komplett ausgekühlt und verfestigt ist. In dieser Zeit entsteht ein Unterdruck in der Verpackung. Um diesem Unterdruck nachgeben zu können, ist der Deckel mit einer oder mehreren sich ringförmig um den Mittelpunkt konzentrisch erstreckenden wellenartigen Ausprägungen versehen, die sich dann während des Schrumpfvorganges glätten und den Deckel nach unten in die Verpackung ziehen. Wäre der Deckel nicht mit diesen wellenartigen Ausprägungen versehen und starr, würde der Unterdruck die Backform nach innen ziehen und verformen.

Trockene Kuchen, wie beispielsweise Rührkuchen, schrumpfen nicht beim Abkühlen, aber das Volumen der Luft in dessen Poren verringert sich ebenfalls. In einer verschlossenen Verpackung gemäß der Erfindung entsteht also auch hierbei ein Unterdruck, so dass auch hierfür der Deckel mit einer oder mehreren sich ringförmig um den Mittelpunkt konzentrisch erstreckenden wellenartigen Ausprägungen notwendig ist.

Nach dem Backvorgang ist jeder Kuchen keimfrei und wie jede andere Konserve jahrelang haltbar, solange die Verpackung das Eindringen von Keimen verhindern kann. Allerdings könnten sich Keime während der wenigen Minuten nach dem Backen und vor dem Versiegeln ansiedeln, insbesondere in der Luft die sich noch zwischen Kuchenoberfläche und Deckel befindet. Diese Möglichkeit ist gering, aber nicht zu vernachlässigen. Sollten sich also nach dem Backvorgang wieder neue Keime gebildet haben, so werden diese durch die große Resthitze von immer noch mindestens 90°C nach dem Versiegeln abgetötet. Die Resthitze in der Packung nach dem Versiegeln beträgt für weitere 5 Minuten 90°C, weitere 5 Minuten 85°C und noch mindestens 20 Minuten 70°C. Fast alle Mikroorganismen sterben bereits bei 65°C ab.

Durch diese mit dem Verfahren zum Backen von Nahrungsmitteln, insbesondere von Kuchen, behandelte Verpackung kann die Haltbarkeit in Bezug auf Lebensmittelsicherheit vor allem von nassen Kuchen auf bis zu 24 Monate gesteigert werden, und zwar ohne Einsatz von Kühlenergie und ohne Konservierungsmittel, sondern mit rein natürlichen Zutaten.

Lagerung, Transport, Distribution und Verkauf sind problemlos in jedem Temperaturbereich und in jedem Einzelhandelsformat ohne Kühlung oder Tiefkühlung möglich. Die Kuchen können vom Verbraucher sicher und hygienisch einwandfrei transportiert und gelagert werden und sind sofort und ohne jegliche Vorbereitung verzehrbar.

Die Erfindung wird im Folgenden anhand eines Ausführungsbeispiels unter Bezugnahme auf die zugehörigen Zeichnungen näher erläutert. Es zeigen:
- Fig. 1:: eine Seitenansicht einer mit dem erfindungsgemäßen Verfahren zum Backen von Nahrungsmitteln behandelten Verpackung mit eingefüllter Backmasse sofort nach der Versiegelung,
- Fig. 2:: eine Seitenansicht der mit dem Verfahren behandelten Verpackung gemäß Fig. 1 nach dem Backvorgang, der Versiegelung und der Abkühlphase,
- Fig. 3:: eine Seitenansicht der Backform der mit dem Verfahren behandelten Verpackung,
- Fig. 4:: eine Perspektivansicht der Backform gemäß Fig. 3,
- Fig. 5:: eine Draufsicht der Backform gemäß Fig. 3,
- Fig. 6:: eine Seitenansicht eines Deckels für die mit dem Verfahren behandelte Verpackung gemäß den Fig. 1 und 2, und
- Fig. 7:: eine Draufsicht auf den Deckel gemäß Fig. 6.

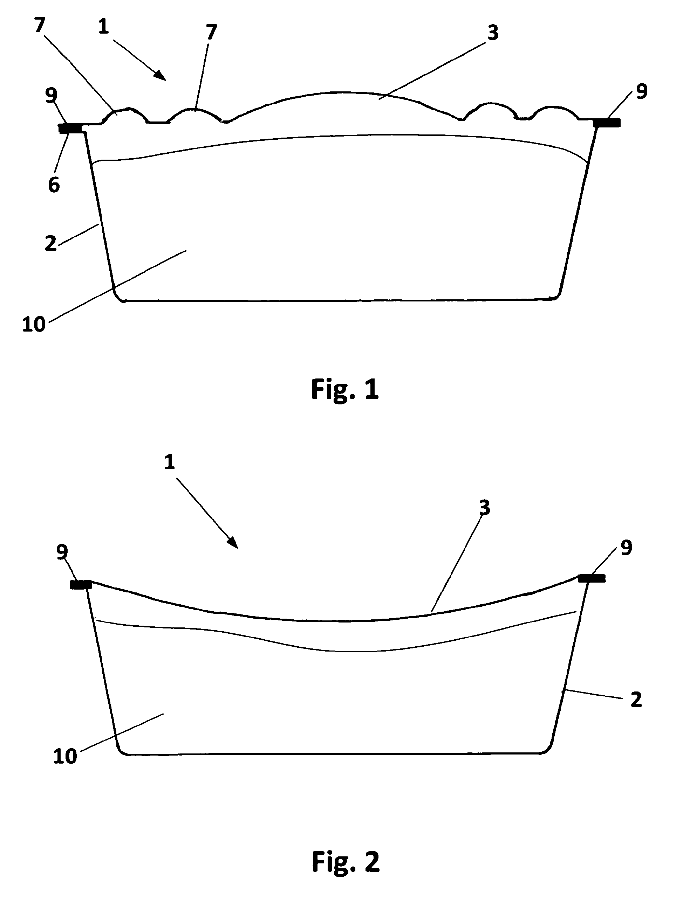

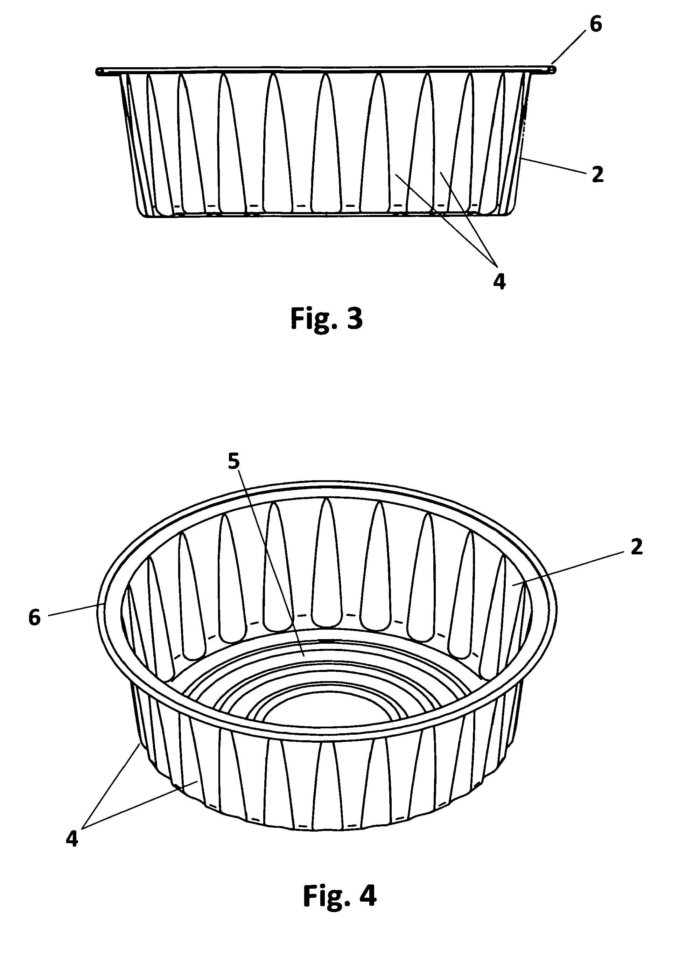

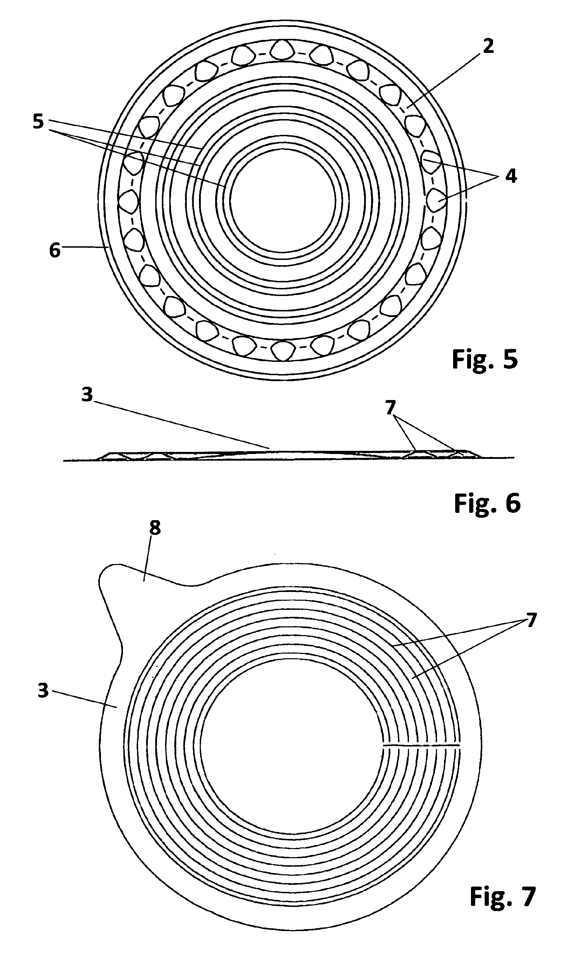

Die Verpackung 1 gemäß den Fig. 1 und 2 besteht aus einer schalen- oder topfförmigen Backform 2 gemäß den Fig. 3 bis 5 und einem flexiblen Deckel 3 aus Aluminiumfolie. Die Backform 2 und der Deckel 3 sind jeweils mit einem backstabilen Siegellack beschichtet.

Die Backform 2 weist an ihren Seitenwänden eine Vielzahl umfangsseitig verteilte Versteifungsrippen 4 und ihrem Boden eine Mehrzahl von ringförmigen Prägungen 5 auf, um der Backform 2 Stabilität zu verleihen.

Öffnungsseitig besitzt die Backform 2 einen umlaufenden Rand 6, auf welchem der flexible Deckel 3 aufgelegt ist. Der Deckel 3 weist mehrere sich ringförmig um den Mittelpunkt konzentrisch erstreckende wellenartige Ausprägungen 7 auf. Zudem weist der Deckel 3 eine seitliche Aufreißlasche 8 auf.

Die Backform 2 wird 3 bis 8 Minuten nach dem Backvorgang mit dem Deckel 3 durch Anwendung von Druck und Hitze durch Verschmelzen des Siegellackes luftdicht und steril versiegelt ist, wie dies durch Bezugsziffer 9 in den Fig. 1 und 2 dargestellt ist.

In Fig. 2 ist in die Backform 2 der Verpackung 1 die Backmasse 10 eingebracht und durch den Schrumpfvorgang nach dem Backvorgang und Versiegeln der Verpackung 1 senkt sich der Deckel 3 ab und die wellenartigen Ausprägungen 7 im Deckel 3 glätten sich, während gleichzeitig die Backmasse 10 verdichtet wird.

### Bezugszeichenliste

- 1: Verpackung
- 2: Backform
- 3: Deckel
- 4: Versteifungsrippen
- 5: Prägungen
- 6: Rand
- 7: Ausprägungen
- 8: Aufreißlasche
- 9: Versiegelung
- 10: Backmasse

## Patentansprüche

1. Verfahren zum Backen von Nahrungsmitteln, insbesondere Kuchen, **gekennzeichnet durch** die Verfahrensschritte:
- Einbringen einer Backmasse (10) in eine schalen- oder topfförmige Backform (2) aus Aluminiumfolie, die mit einem backstabilen Siegellack beschichtet ist,
- Backen der Backmasse in der Backform (2) für 40 bis 60 Minuten bei einer Backtemperatur je nach Sorte der Backmasse (10) bei 180 bis 220°C, wobei die Kerntemperatur nach dem Backvorgang über 90°C beträgt,
- nach einer kurzen Wartezeit von 3 bis 8 Minuten nach dem Backvorgang Auflegen eines flexiblen Deckels aus Aluminiumfolie, deren Rand mit einem backstabilen Siegellack beschichtet ist, auf den Rand mit Siegelfläche der Backform,
- Versiegeln der Backform mit dem Deckel mittels Druck und Hitze in einer Siegelmaschine, wobei die Kerntemperatur der Backmasse zu diesem Zeitpunkt über 90°C beträgt.

## Claims

1. Process for baking foodstuff, especially cake, **characterized by** the following procedural steps:
- Putting a baking mixture (10) in a trough-shaped or pot-like baking mold (2) made from aluminum foil that is coated with a baking-resistant sealing wax;
- Baking the baking mixture in the baking mold (2) between 40 and 60 min at a temperature depending on the baking mixture (10), i.e. between 180° C and 220° C, with the core temperature being maintained at more than 90° C after the baking procedure;
- Placing a flexible lid made from aluminum foil onto the edge of the baking mold 3-8 min after the end of the baking procedure, with the edge of the foil being coated with baking-resistant sealing wax;
- Sealing the baking mold with the lid in a sealing apparatus by applying pressure and heat, with the core temperature of the baking mixture having a temperature of more than 90° C after the baking procedure.

## Revendications

1. Procédé de cuisson de produits alimentaires, en particulier de gâteaux, **caractérisé par** les étapes de procédé:
- Disposition d'une masse à cuire (10) dans un moule de cuisson en forme de récipient ou de casserole (2) en feuille d'aluminium qui est revêtue d'une cire à cacheter stable à la cuisson,
- Cuisson de la masse à cuire dans le moule de cuisson (2) entre 40 et 60 minutes à une température de cuisson selon chaque sorte de masse à cuire (10) de 180 à 220°C, bien que la température intérieure soit supérieure à 90°C après le processus de cuisson,
- Après un bref temps d'attente de 3 à 8 minutes après le procédé de cuisson, disposer un couvercle flexible en feuille d'aluminium dont le rebord est revêtue d'une cire à cacheter stable à la cuisson, sur le rebord de la surface à cacheter du moule de cuisson,
- Cacheter le moule de cuisson avec le couvercle au moyen de la pression et de la chaleur dans une machine à cacheter bien que la température intérieure de la masse à cuire soit à ce moment supérieure à 90°C.
